# EUROPEAN PATENT APPLICATION

(11) **EP 3 493 359 A1**
(43) Date of publication of application: **05.06.2019**
(21) Application number: 17382817.9
(22) Date of filing: 01.12.2017
(51) Int. Cl.: H02J 13/00, H02J 1/00, H02J 3/00, H02J 4/00

(54) **A METHOD AND A SYSTEM FOR MONITORING THE PERFORMANCE OF NODES IN A PEER-TO-PEER DISTRIBUTED ENERGY NETWORK**

(71) Applicant: Telefonica Innovacion Alpha S.L, 28013 Madrid (ES)
(72) Inventor: Phoel, Wayne, 28013 Madrid (ES); Pilaszanovich, Jakab, 28013 Madrid (ES); García Mendoza-Sánchez, Armando Antonio, 28013 Madrid (ES); Stalling, Lars, 28013 Madrid (ES)
(74) Representative: Carlos Hernando, Borja

(57) **Abstract**

The method comprising tracking, during a certain period of time, by an energy controller operatively connected with one or more energy sensors located in a given node of an energy network, a range of statistics related to an amount of electrical energy flowing through the given node; tracking, during said certain period of time, by the energy controller operatively connected with a plurality of energy sensors located in neighbor nodes of the given node, a range of statistics related to an amount of electrical energy flowing through each neighbor node; compiling, by the energy controller, the range of statistics tracked from the given node and from the neighbor nodes during said certain period of time, providing a compiled node performance information; and identifying, by the energy controller, temporal and spatial patterns and correlations among patterns in the compiled node performance information to determine inefficiencies in the given node.

## Description

### Field of the invention

The present invention generally relates to distributed energy networks. In particular, present invention relates to a method, and to a system, for monitoring the performance of nodes in a peer-to-peer distributed energy network, in which said energy network is adapted for the distribution of electrical energy, i.e. the nodes included in the energy network are connected in such a way that electrical energy can flow among them.

### Background of the invention

Microgrids are an extension of the present centralized grids. Performance monitoring concentrates on determining faults, and measuring reactance and voltage levels because the centralized architecture causes local effects to have global impact.

Smart grids provide a digital infrastructure over the traditional grid. Smart meters and smart sensors give insights on usage patterns. But they are typically only focused on understanding time-of-day usage patterns with potential ultimate goal of the utility telling an appliance when to operate based on electrical energy (or electricity) availability.

Energy routing is seen as an enabling technology needed for implementing reliability evaluation on the ad hoc networks proposed by this technology. The present invention will make use of third party concepts, products and services, mostly on DC power routing.

User evaluation systems on a peer to peer network happen on a user basis. These systems are adequate when all users have a direct insight to the service that has been provided by other users. As concepts for peer-to-peer energy networks are still young, little work has focused on performance monitoring for such systems.

For instance, Final Technology Performance Report February 2015, Pecan Street Smart Grid Demonstration Program, U.S. Department of Energy Award Number: DE-OE-0000219 discloses the Pecan Street Smart Grid Demonstration Program, signed-up over 1,000 participants who are sharing their home or businesses' electricity consumption data with the project via green button protocols, smart meters, and/or a home energy monitoring system (HEMS). Pecan Street completed the installation of HEMS in 750 homes and 25 commercial properties. The program provided incentives to increase the installed base of roof-top solar photovoltaic (PV) systems, plug-in electric vehicles with Level 2 charging, and smart appliances.

Furthermore, document Real-Time State Estimation of the EPFL-Campus Medium-Voltage Grid by Using PMUs, Pignati, Marco et al. The Sixth Conference on Innovative Smart Grid Technologies (ISGT2015), Washington, DC, USA, February 17-20, 2015 describes the real-time monitoring infrastructure of the smart-grid pilot on the EPFL campus. It experimentally validates the concept of a real-time state-estimation for a 20 kV active distribution network. The authors designed and put into operation the whole infrastructure composed by the following main elements: (1) dedicated PMUs connected on the medium-voltage side of the network secondary substations by means of specific current/voltage transducers; (2) a dedicated communication network engineered to support stringent time limits and (3) an innovative state estimation process for real-time monitoring that incorporates phasor-data concentration and state estimation processes. Special care was taken to make the whole chain resilient to cyber-attacks, equipment failures and power outages.

However, existing performance monitoring systems focus predominantly on either conventional power grids or localized microgrids, each of which are hierarchical in their structure and tend to have one source supplying many users. If there are multiple sources, they are typically physically separated from the users. With the emerging technology to enable peer-to-peer energy networks, local performance monitoring becomes important to influence local optimizations; centralized solutions become inefficient.

More solutions are therefore needed for monitoring the performance of decentralized energy distributions to provide an opportunity to categorize and evaluate the physical infrastructure of the energy network, and also to improve real-time decisions and infrastructure upgrades.

### Description of the Invention

Embodiments of the present invention provide according to an aspect a method for monitoring the performance of nodes in a peer-to-peer distributed energy network, wherein said energy network being adapted for the distribution of electrical energy and comprising a plurality of nodes, and wherein each node comprising one or more devices including electrical energy loads.

The proposed method comprises tracking, during a certain period of time, by an energy controller operatively connected, physically or wirelessly, with one or more energy sensors located in a given node of the energy network, a range of statistics related to an amount of electrical energy flowing through the given node; tracking, during said certain period of time, by the energy controller operatively connected, physically or wirelessly, with a plurality of energy sensors located in neighbor nodes of the given node, a range of statistics related to an amount of electrical energy flowing through each neighbor node, wherein each neighbor node having one or more energy sensors located therein; compiling (i.e. gathering), by the energy controller, the range of statistics tracked from the given node and from the neighbor nodes during said certain period of time, providing a compiled node performance information; and identifying, by the energy controller, temporal and spatial patterns and correlations among patterns in the compiled node performance information to determine inefficiencies in the given node such as bottlenecks, underutilized resources, low latency, energy losses, etc.

According to the proposed method, the range of statistics tracked may include voltages and/or currents levels in the given node/neighbor nodes, energy costs in the given node/neighbor nodes, information about physical features of the given node/neighbor nodes including losses and/or congestion, etc.

According to an embodiment, the one or more energy sensors located on the given node/neighbor nodes are located at different layers of a layered stack model of the given node/neighbor nodes (preferably comprising three or more layers), being the range of statistics captured at each layer of the layered stack model.

Preferably, the different layers comprise four layers (i.e. a first layer located at the top of the stack model, a second layer located under the first layer, a third layer located under the second layer and a fourth layer located at the bottom of the stack model) in which the first layer includes said energy loads and the range of statistics captured at each layer comprises: at the first layer, an amount of electrical energy used by the energy loads; at the second layer, information about which neighbor nodes the given node/neighbor nodes interacts/interact including when the given node/neighbor nodes creates/create agreements to send or receive electrical energy and any time-delay of the sending or reception; at the third layer, information about voltages before and after a voltage conversion and power inversion implemented in the given node/neighbor nodes and statistics available from negotiating paths with neighbors; and at the fourth layer, information about losses over paths between neighbors and statistics including frequency with which a path between neighbors is used including direction of electrical energy flow and estimated path capacity.

In an embodiment, the first layer further includes electrical energy generation elements and/or electrical energy storage elements, i.e. the one or more devices besides including energy loads in this case further include electrical energy generation elements such as solar panels, wind turbines, diesel generation engines, etc. and/or electrical energy storage elements such as capacitors or batteries. According to this embodiment, the range of statistics of the first layer may further comprise an amount of electrical energy generated by the energy generation elements and/or storage levels of the electrical energy storage elements including changes in capacity or charge rates.

Moreover, according to yet another embodiment, the range of statistics further includes information about ambient temperature, humidity and/or pressure in the given node/neighbor nodes.

According to the proposed method, the energy controller may further track under which circumstances a certain electrical energy load is used, including correlating specific electrical energy load use with statistics including temperature, time of day, time of year, energy cost and/or electrical energy reliability/intermittency. Besides, the energy controller may also use the identified temporal and spatial patterns and correlations among patterns to develop a representation of the state of the energy network to optimize decisions including modifying a distribution route of the electrical energy within the energy network.

Embodiments of the present invention also provide according to another aspect a system configured to perform the method embodiment steps and operations summarized above and disclosed in detail below.

In particular, the proposed system has a plurality of connected nodes of an energy network adapted and configured to distribute energy between them, preferably electrical energy, and each comprising one or more devices including energy loads, among others. Moreover, the proposed system also includes a plurality of energy sensors and an energy controller operatively connected with the plurality of energy sensors via a communication network.

Each node of the plurality of nodes comprises one or more of said energy sensors adapted and configured to provide information about the node in which they are located, said information including a range of statistics related to an amount of electrical energy flowing through the node. The energy controller is adapted and configured to track said information of a given node of the plurality of nodes during a certain period of time; track said information of neighbor nodes of the given node during said certain period of time; compile the information tracked from the given node and from the neighbor nodes, providing a compiled node performance information; and
identify temporal and spatial patterns and correlations among patterns in the compiled node performance information to determine inefficiencies in the given node.

The one or more energy sensors are preferably adapted and configured to be located at different layers of a layered stack model (having at least three layers) of each node of the plurality of nodes, so said information being captured at each layer of the layered stack model.

In the proposed system, the loads may include lighting systems and/or appliances including televisions, radios, kitchen appliances, and refrigerators and/or heating equipment, among others. In addition, in the proposed system, the one or more devices may further include electrical energy generation elements such as solar panels, wind turbines, diesel generation systems, geothermal systems, a human-powered crank generator, etc. and/or electrical energy storage elements such as batteries or capacitors.

The energy controller can be located centralized in one location, for instance at a node of the plurality of nodes or at a remote site such as the offices of a service provider. In this last case the energy controller is a computer or a server computing system having access or receiving the information from the nodes of the energy network. Alternatively, the energy controller can be located distributed among some or all of the nodes of the plurality of nodes, with necessary communication among the nodes.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

Present invention provides a more efficient technology for monitoring the state of the network for distributed peer-to-peer energy networks than the conventional approaches designed for hierarchical systems with centralized generation. In particular, the distributed monitoring enables faster and more localized responses to local network issues (and keeps the issues local), such as faults, overloads, and temporal inefficiencies.

### Brief Description of the Drawings

The previous and other advantages and features will be more fully understood from the following detailed description of embodiments, with reference to the attached drawings, which must be considered in an illustrative and non-limiting manner, in which:
Fig. 1 is a flow chart illustrating an embodiment of a method for monitoring the performance of nodes in a peer-to-peer distributed energy network.
Fig. 2 is a schematic illustration of a four layer model used by present invention to perform said performance monitoring, in accordance with a preferred embodiment.
Figs. 3A and 3B schematically illustrate examples of where voltage and current measurements may be taken in the fourth layer, according to an embodiment.

### Detailed Description of the Invention and of Preferred Embodiments

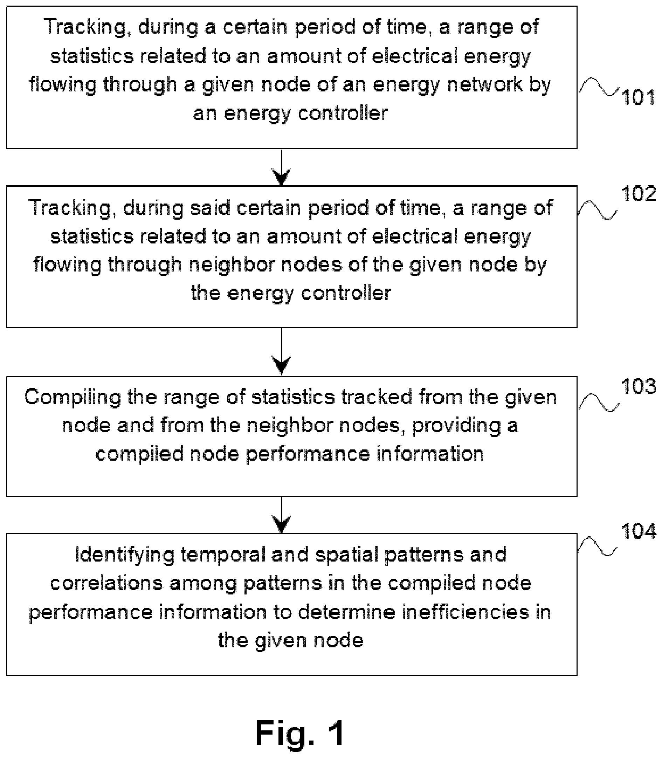

Fig. 1 illustrates an embodiment of the proposed method for monitoring the performance of nodes in a peer-to-peer distributed energy network adapted for the distribution of electrical energy and comprising a plurality of nodes (e.g. a home, among others). According to the embodiment of Fig. 1, an energy controller, i.e. a computing system/agent/module having computing and/or processing skills, and implemented in hardware, software or combinations thereof, tracks, step 101, during a certain period of time (configurable), a range of statistics related to an amount of electrical energy flowing through a given node of the plurality of nodes and, step 102, a range of statistics related to an amount of electrical energy flowing through each neighbor node. Then, step 103, the energy controller, compiles the range of statistics tracked from the given node and from the neighbor nodes during said certain period of time, providing a compiled node performance information. Finally, step 104, temporal and spatial patterns and correlations among patterns in the compiled node performance information are determined by the energy controller to determine inefficiencies (e.g. bottlenecks, underutilized resources, low latency, energy losses, among others) in the given node.

To perform the tracking of the range of statistics, the energy controller is operatively connected, either physically or wirelessly, with one or more energy sensors (e.g. digital sensors), located in each of the nodes of the plurality of nodes of the energy network.

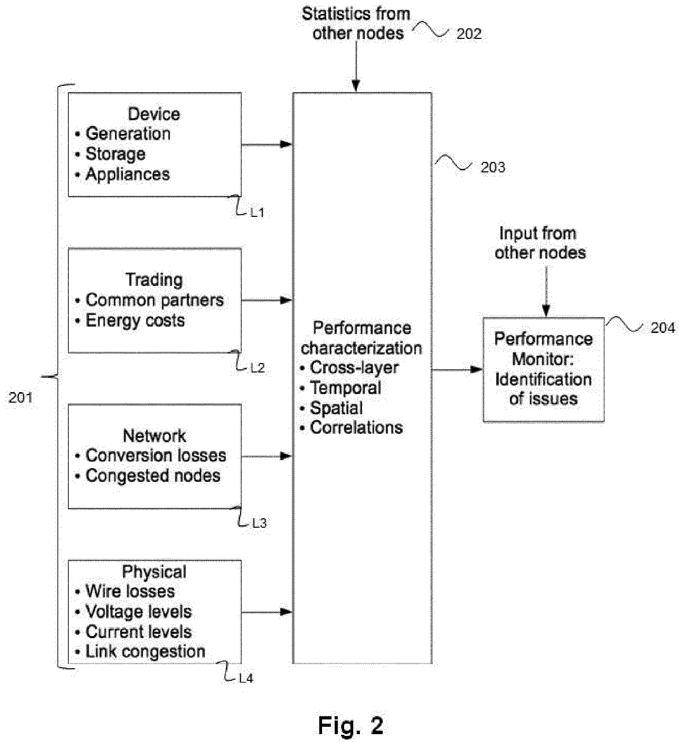

With reference now to Fig. 2, therein it is illustrates another embodiment of the present invention. In this case, a four-layer model 201 for determining energy sensors placement and statistics captured is used. The basic four layers L1...L4 are shown in the figure, along with examples of the statistics captured at each layer. At a high level, the captured statistics from each layer in a node are passed to a function for characterizing the performance of the local node and its neighbors as available information allows. The local history can be combined with information available from neighbors 202, either through direct experiences of exchanging electrical energy or through communication of energy statistics. The local characterization 203 is then passed to the energy controller that identifies when and where inefficiencies exist in a given node or in the energy network.

According to this particular embodiment, at the first layer, or Device Layer, L1, energy sensors report statistics such as the amount of electrical energy generated by electrical energy generation elements (e.g. solar, wind, diesel, or other) over time; storage levels of electrical energy storage elements (e.g. batteries) over time, including any changes in capacity, charge rates, etc.; the amount of electrical energy used by electrical energy loads (e.g. appliances, lights, refrigeration and/or heating systems, etc.) over time, etc. If electrical energy loads (e.g. appliances) are outfitted with appropriate APIs (application programming interfaces), they may be able to report appliance-specific characteristics to augment the data on electrical energy use.

It should be noted that the presence of electrical energy generation elements and electrical energy storage elements in a node is not mandatory. The basic configuration scheme of a node applies if there are only electrical energy loads at the node, i.e. the one or more devices a node has need only to include some type of electrical energy loads, e.g. a home appliance, such as a television, a microwave, etc. or lights or any type of refrigeration system.

At the second layer, or Trading Layer, L2, information about with which trading neighbor nodes a given node interacts, including when it creates agreements to send or receive electrical energy and any time-delay of that transfer, may be collected. Additionally, if relevant, the statistics captured here may also include information about price, including price estimates for current or future transactions as well as, if available, information on costs of equipment at the trading neighbor node.

At the third layer, or Network Layer, L3, where this model implements voltage conversion and power inversion, if needed, energy sensors collect information on voltages before and after conversion, as well as statistics available from negotiating paths with neighbors.

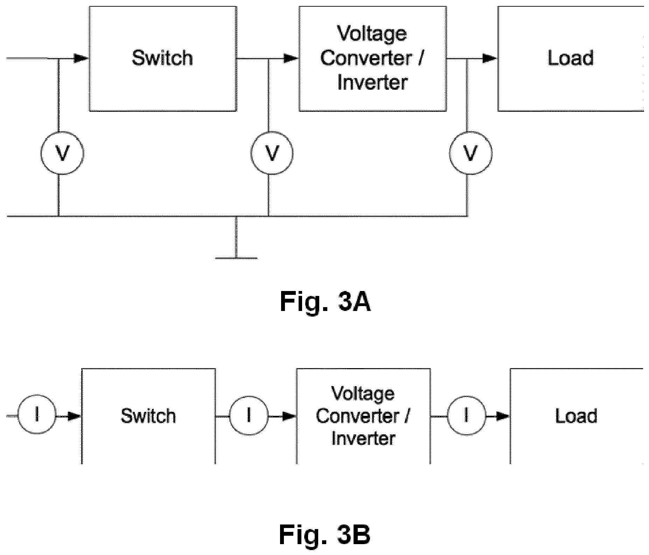

Several additional energy sensors are desirable at the fourth layer, or Physical Layer, L4. These include voltage and current meters and a mechanism for assessing the loss over the link (potentially through calculating the voltage drop from the reported voltage at the other end, through applying the current measurement to a known value for the resistance of the wire, or other approach) as well as detecting faults. The Physical Layer energy sensor can also report statistics such as the frequency with which the link is used, including direction of electrical energy flow and estimated link capacity as ways to indicate the congestion on the link. Most of the energy sensors used here are software-based, although some statistics require insertion of hardware sensors. Examples of where voltage (V) and current (I) measurements may be taken are shown in Figs. 3A and 3B.

Moreover, in other embodiments, additional sensors that can be integrated to measure external parameters, such as ambient temperature, pressure, humidity, etc., as relevant, are also included in the Physical Layer L4. In addition, the proposed system may include active measurement techniques through which it probes the energy network in order to learn a response to an impulse that has not occurred naturally.

The statistics captured at each layer L1...L4 are passed to the energy controller or the energy controller tracks the captured statistics. The energy controller then compiles the history of the different relevant statistics and calculates correlations across layers and across time. Using the history and correlations, the energy controller identifies times of under- and over-utilization of resources and indicates potential causes. The energy controller also characterizes expected performance based on messages shared with neighbors and past performance in order to measure deviations from what is expected (such as intermittency of links).

The energy controller can also characterize user priorities and responses if appropriate APIs are present in devices. Specifically, the system can track when certain electrical energy loads are used in certain circumstances, including correlating specific device use with statistics such as temperature, time of day, time of year, energy price, energy reliability/intermittency, among others.

The energy controller can also estimate approximate performance of neighbors' capabilities using a combination of messages shared with neighbors and the performance observed. For example, the Network Layer L3 may indicate there is electrical energy available two or three hops away, but it cannot be delivered because of an overloaded intermediary node. The energy controller can also detect new nodes in the energy network and determine initial, and updated, characterizations of their capabilities and performance in order to impact decisions on local and network operation.

The energy controller may also utilize the aggregate shared information from nodes in the energy network to develop a picture of the state of the energy network such that the system can optimize decisions like distribution routes and other configurable parameters. The assessments performed by the energy controller can consider network efficiency in terms of electrical energy losses in the energy network, price of electrical energy and assets, or other measures of utility appropriate to the users and the system implementation.

The energy controller can be either centralized in one location (e.g. a given node of the plurality of nodes or in a remote site) or distributed among many or all nodes of the plurality of nodes of the energy network. If the energy controller is centralized, the controller receives raw and/or processed statistics from many or all nodes in the energy network. The fidelity of the shared statistics depends on the capacity of the communication links connecting the nodes to the energy controller. The energy controller may report its assessment of the state of the given node (or of the energy network if the computations are performed for all the nodes of the energy network) to network administration functions and may distribute some or all of its findings to the network nodes.

If monitoring is decentralized, the energy controller running on networked nodes share relevant statistics (raw and/or processed) within a neighborhood defined and adjustable by policy. The energy controller then can form localized pictures of the state of the energy network.

In the case of overloads or faults in the energy network, low latency messages can be sent to appropriate nodes to mitigate, or otherwise respond to, the effects of the detected problem.

Although Fig. 2 shows four distinct layers (L1...L4), the invention can be implemented using more layers or fewer, as appropriate. For example, the four layers L1...L4 could be collapsed into three by moving a routing component of the Network Layer L3 into the Trading Layer L2 and moving voltage conversion to the Physical Layer L4. Or, alternatively, the energy storage elements could be separated into a layer different from the energy generation elements and energy loads.

While the foregoing is directed to embodiments of the present invention, other and further embodiments of the invention may be devised without departing from the basic scope thereof. For example, other aspects may be implemented in hardware or software or in a combination of hardware and software.

The scope of the present invention is determined by the claims that follow.

## Claims

1. A method for monitoring the performance of nodes in a peer-to-peer distributed energy network, wherein said energy network being adapted for the distribution of electrical energy and comprising a plurality of nodes, and wherein each node comprising one or more devices including electrical energy loads, the method comprising:
tracking, during a certain period of time, by an energy controller operatively connected with one or more energy sensors located in a given node of the energy network, a range of statistics related to an amount of electrical energy flowing through the given node;
tracking, during said certain period of time, by the energy controller operatively connected with a plurality of energy sensors located in neighbor nodes of the given node, a range of statistics related to an amount of electrical energy flowing through each neighbor node, wherein each neighbor node having one or more energy sensors located therein;
compiling, by the energy controller, the range of statistics tracked from the given node and from the neighbor nodes during said certain period of time, providing a compiled node performance information; and
identifying, by the energy controller, temporal and spatial patterns and correlations among patterns in the compiled node performance information to determine inefficiencies in the given node.

2. The method of claim 1, wherein the range of statistics tracked including one or more of voltages and/or currents levels in the given node/neighbor nodes, energy costs in the given node/neighbor nodes and/or information about physical features of the given node/neighbor nodes including losses and/or congestion.

3. The method of previous claims, wherein the one or more energy sensors located on the given node/neighbor nodes being located at different layers of a layered stack model of the given node/neighbor nodes, said different layers at least comprising three layers, and wherein said range of statistics being captured at each layer of the layered stack model.

4. The method of claim 3, wherein:
the different layers comprise four layers: a first layer located at the top of the stack model, a second layer located under the first layer, a third layer located under the second layer and a fourth layer located at the bottom of the stack model;
the first layer includes said energy loads; and
the range of statistics captured at each layer comprises:
at the first layer, an amount of electrical energy used by the energy loads;
at the second layer, information about which neighbor nodes the given node/neighbor nodes interacts/interact including when the given node/neighbor nodes creates/create agreements to send or receive electrical energy and any time-delay of the sending or reception;
at the third layer, information about voltages before and after a voltage conversion and power inversion implemented in the given node/neighbor nodes and statistics available from negotiating paths with neighbors; and
at the fourth layer, information about losses over paths between neighbors and statistics including frequency with which a path between neighbors is used including direction of electrical energy flow and estimated path capacity.

5. The method of claim 4, wherein said first layer further includes electrical energy generation elements and/or electrical energy storage elements and wherein the range of statistics of the first layer further comprises an amount of electrical energy generated by the energy generation elements and/or storage levels of the electrical energy storage elements including changes in capacity or charge rates.

6. The method of claim 2, 4 or 5, wherein the range of statistics further includes information about ambient temperature, humidity and/or pressure in the given node/neighbor nodes.

7. The method of claim 1, further comprising tracking, by the energy controller, under which circumstances a certain electrical energy load is used, including correlating specific electrical energy load use with statistics including temperature, time of day, time of year, energy cost and/or electrical energy reliability/intermittency.

8. The method of claim 1, further comprising using, by the energy controller, the identified temporal and spatial patterns and correlations among patterns to develop a representation of the state of the energy network to optimize decisions including modifying a distribution route of the electrical energy within the energy network.

9. The method of previous claims, wherein the energy controller being located centralized in one location including a node of the plurality of nodes or a remote site.

10. The method of previous claims 1 to 8, wherein the energy controller being located distributed among some or all of the nodes of the plurality of nodes.

11. A system for monitoring the performance of nodes in a peer-to-peer distributed energy network, the system comprising:
a plurality of nodes of an energy network, wherein said energy network being configured and adapted for the distribution of electrical energy and wherein each of said plurality of nodes comprising one or more devices including electrical energy loads;
a plurality of energy sensors, wherein each node of the plurality of nodes comprising one or more of said energy sensors and wherein the one or more energy sensors located in a node being adapted and configured to provide information about the node in which they are located, said information including a range of statistics related to an amount of electrical energy flowing through the node; and
an energy controller operatively connected with the plurality of energy sensors, wherein the energy controller being adapted and configured to:
track said information of a given node of the plurality of nodes during a certain period of time;
track said information of neighbor nodes of the given node during said certain period of time;
compile the information tracked from the given node and from the neighbor nodes, providing a compiled node performance information; and
identify temporal and spatial patterns and correlations among patterns in the compiled node performance information to determine inefficiencies in the given node.

12. The system of claim 11, wherein the one or more energy sensors being adapted and configured to be located at different layers of a layered stack model of each node of the plurality of nodes, wherein said different layers at least comprise three layers, and wherein said information being captured at each layer of the layered stack model.

13. The system of claim 12, wherein:
the different layers comprise four layers: a first layer located at the top of the stack model, a second layer located under the first layer, a third layer located under the second layer and a fourth layer located at the bottom of the stack model;
the first layer includes said energy loads; and
the range of statistics captured at each layer comprises:
at the first layer, amount of electrical energy used by the energy loads;
at the second layer, information about which neighbor nodes the given node/neighbor nodes interacts/interact including when the given node/neighbor nodes creates/create agreements to send or receive electrical energy and any time-delay of the sending or reception;
at the third layer, information about voltages before and after a voltage conversion and power inversion implemented in the given node/neighbor nodes and statistics available from negotiating paths with neighbors; and
at the fourth layer, information about losses over paths between neighbors and statistics including frequency with which a path between neighbors is used including direction of electrical energy flow and estimated path capacity.

14. The system of claim 13, wherein said first layer further includes electrical energy generation elements and/or electrical energy storage elements, the range of statistics of the first layer further comprising an amount of electrical energy generated by the energy generation elements and/or storage levels of the electrical energy storage elements including changes in capacity or charge rates, and wherein the fourth layer further including additional sensors adapted and configured to measure external parameters including ambient temperature, humidity and/or pressure.

15. A non-transitory computer readable medium comprising code instructions that when executed in at least one processor of a computer system implement the method according to claim 1.
